# EUROPÄISCHE PATENTSCHRIFT

(11) **EP 1 431 106 B1**
(45) Veröffentlichungstag und Bekanntmachung des Hinweises auf die Patenterteilung: **02.04.2008**
(21) Anmeldenummer: 03029135.5
(22) Anmeldetag: 18.12.2003
(51) Int. Cl.: B60N 2/36, B60N 2/30

(54) **Klappbarer Sitz**
Collapsible seat
Siège pliable

(30) Priorität: 20.12.2002 DE 10259854
(43) Veröffentlichungstag der Anmeldung: 23.06.2004
(73) Patentinhaber: ADAM OPEL AG, 65423 Rüsselsheim (DE)
(72) Erfinder: Leopold, Frank, 65232 Taunusstein-Orlen (DE); Schlamann, Hermann-Walter, 55288 Armsheim (DE)

(56) Entgegenhaltungen:
- FR-A- 2 829 441
- US-A- 3 202 453
- US-A- 6 113 191
- US-B1- 6 234 553
- PATENT ABSTRACTS OF JAPAN vol. 2000, no. 09, 13. Oktober 2000 (2000-10-13) -& JP 2000 153728 A (TOYOTA MOTOR CORP), 6. Juni 2000 (2000-06-06)

## Beschreibung

Die vorliegende Erfindung betrifft einen klappbaren Sitz, insbesondere für ein Kraftfahrzeug.

Aus DE 10 047 742 A1 ist ein klappbarer Sitz mit einem Sitzteil, einem Rückenteil und einer Tragstruktur bekannt, bei dem das Sitzteil mit einem unteren Abschnitt des Rückenteils gelenkig verbunden ist und das Rückenteil in Bezug auf die Tragstruktur um eine feste Achse schwenkbar gehalten ist.

Bei diesem bekannten Sitz wird das Rückenteil niedergeklappt, um den Sitz in seine zusammengeklappte Stellung zu bringen. Gekoppelt an die Bewegung des Rückenteils gleitet das Sitzteil nach hinten und gleichzeitig nach unten und gibt so Platz frei, der benötigt wird, um das Rückenteil in eine horizontale Stellung bringen zu können, in der es eine bündige Verlängerung einer sich an die Rückseite des Sitzes anschließenden Ladefläche des Kraftfahrzeugs bildet.

Ein Problem dieses bekannten Sitzes liegt darin, dass das Rückenteil im Allgemeinen länger als das Sitzteil ist, so dass es im zusammengeklappten Zustand mehr Platz in der Fahrzeuglängsrichtung beansprucht, als dies die Sitzfläche in dem aufgeklappten Zustand tut. Der Abstand zwischen dem klappbaren Sitz und einem davor befindlichen Sitz, Armaturenbrett oder anderen Teilen des Kraftfahrzeugs muss daher groß genug sein, um ein vollständiges Flachlegen der Rückenlehne zu ermöglichen. Der Sitz eignet sich daher nicht zum Einsatz in Kleinwagen, in denen der nötige Platz zum Flachlegen der Rückenlehne nicht zur Verfügung steht. Wenn die Rückenlehne überdies durch eine Nackenstütze verlängert ist, so ergibt sich ein Platzbedarf beim Flachlegen, der auch in größeren Fahrzeugen nicht ohne weiteres zu befriedigen ist, und der es erforderlich macht, entweder die Nackenstütze vor dem Flachlegen abzumontieren oder einen Schwenkmechanismus vorzusehen, der die Nackenstütze beim Flachlegen der Rückenlehne automatisch umklappt.

US 6 234 553 B1 offenbart einen klappbaren Sitz nach dem Oberbegriff des Anspruchs 1. Bei diesem bekannten Sitz ist die Bahn der ersten Achse durch eine Schiene definiert, in der eine Lagervorrichtung des Sitz-Rückenteils gleitet. Die Bahn der zweiten Achse ist definiert durch zwei Pfosten, die jeweils beiderseits gelenkig an dem Boden der Fahrgastzelle, bzw. dem Sitzteil des Sitzes befestigt sind und das Sitzteil und mit ihm die zweite Achse auf einer kreisbogenförmigen Bahn führen. In einer zusammengeklappten Stellung des Sitzes liegen die Pfosten flach auf dem Boden auf, und Sitz- und Rückenteil des Sitzes liegen flach aufeinander. Es ist nicht möglich, den zusammengeklappten Sitz allein durch Anheben eines oberen bzw. vorderen Bereichs des Rückenteils wieder aufzuklappen.

Aus US-8-202 453 ist ein klappbarer Sitz für ein Fahrzeug bekannt, bei dem wie bei der oben benannten US-B1-6 234 553 ein

Rückenteil des Sitzes zwei Schwenkachsen aufweist, die in Bezug auf eine Tragstruktur verschiebbar sind. Im Gegensatz zu der zuvor diskutierten Schrift ist hier die Bahn der höher gelegenen ersten Achse durch einen an der Tragstruktur angelenkten Lenker definiert, und die zweite Bahn ist durch eine Schiene gebildet. Auch bei dieser Ausgestaltung ist das Wiederaufklappen des zusammengeklappten Sitzes problematisch.

Die Aufgabe der Erfindung ist, einen einfachen klappbaren Sitz zu schaffen.

Die Aufgabe wird gelöst durch einen Sitz mit dem Merkmal des Anspruchs 1.

Vorzugsweise liegt das erste Ende des Lenkers in aufgeklapptem Zustand des Sitzes tiefer als das zweite. Dies hat zur Folge, dass, um die abschüssige Bahn der ersten Achse zu realisieren, das erste Ende in Bezug auf den Sitz auch weiter vorn liegen muss als das zweite, was eine kompaktere Konstruktion des Sitzes als im gegenteiligen Fall ermöglicht.

Die Bahn der zweiten Achse ist vorzugsweise durch eine an der Tragstruktur gebildete erste Schiene definiert. Diese Schiene wird im Allgemeinen einen im Wesentlichen horizontalen oder von vorn nach hinten geringfügig abschüssigen Verlauf haben.

Die gelenkige Verbindung des Rückenteils mit dem Sitzteil ist vorzugsweise durch einen Arm gebildet, der einerseits an den unteren Abschnitt des Rückenteils und andererseits an das Sitzteil angelenkt ist. Eine solche Verbindung über zwei Gelenkachsen gibt dem Sitzteil bei der Klappbewegung des Sitzes eine größere Beweglichkeit in Bezug auf das Rückenteil als bei einer einfach gelenkigen Verbindung und macht es so einfacher, das Sitzteil in einer an das Flachlegen des Rückenteils gekoppelten Bewegung so zu verlagern, dass es das Volumen freigibt, in welches das Rückenteil eindringen muss, um eine horizontale oder gering abschüssige Stellung einnehmen zu können.

Vorzugsweise ist der Arm an einem vorderen Abschnitt des Sitzteils angelenkt. Dies ermöglicht es dem hinteren Abschnitt des Sitzteils bei seiner Verlagerung, frei von dem Rückenteil wegzuschwenken, um so Platz für den Lendenbereich des Rückenteils freizumachen.

Erfindungsgemäß ist eine zweite Schiene vorgesehen, in der der vordere Abschnitt des Sitzteils verschiebbar abgestützt ist, so dass er bei einem Wiederaufklappen des Sitzes durch den Arm ohne Schwierigkeiten in die entsprechende Stellung zurückgeschoben werden kann. Eine dritte Schiene kann an der Tragstruktur vorgesehen werden, um auch den hinteren Abschnitt des Sitzteils beim Auf- und Zuklappen verschiebbar abzustützen.

Weitere Merkmale und Vorteile der Erfindung ergeben sich aus der nachfolgenden Beschreibung eines Ausführungsbeispiels unter Bezugnahme auf die beigefügten Figuren. Es zeigen:
- Fig. 1: eine schematische Seitenansicht des erfindungsgemäßen Sitzes in aufgeklappter Position;
- Fig. 2: eine schematische Seitenansicht des Sitzes in einer Zwischenstellung zwischen der aufgeklappten und der zugeklappten Position und
- Fig. 3: den Sitz in der zugeklappten Position.

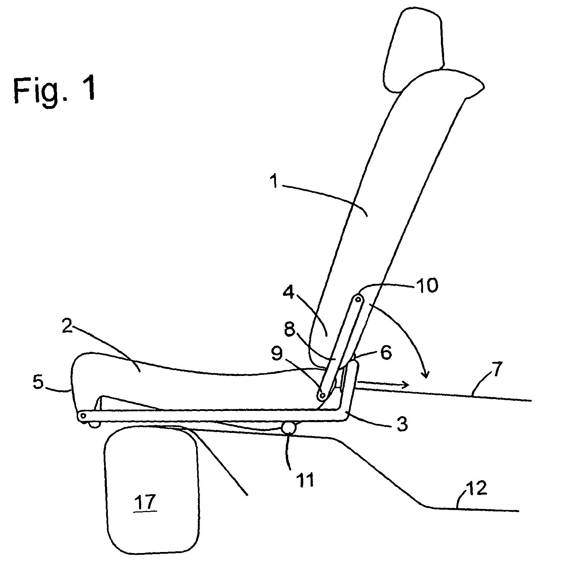

Der in Fig. 1 gezeigte Sitz umfasst ein Rückenteil 1, ein Sitzteil 2 und eine Tragstruktur, die durch diverse Schienen und andere, zum Teil nicht dargestellte Teile der Karosserie eines Kraftfahrzeugs gebildet sind, in welchem der erfindungsgemäße Sitz eingebaut ist. Rückenteil 1 und Sitzteil 2 sind miteinander durch einen gewinkelten Arm 3 verbunden, von dem ein erstes Ende an einen unteren Bereich 4 des Rückenteils 1 angelenkt ist und das zweite Ende an einen vorderen Rand 5 des Sitzteils 2 angelenkt ist. An den unteren Bereich 4 ist auch ein in Fig. 1 weitgehend verdeckter Stützarm 6 befestigt, der an seinem freien Ende einen senkrecht zur Ebene der Figur abstehenden, nicht dargestellten Zapfen aufweist, welcher verschiebbar in ein U- oder C-Profil 7 eingreift, welches in der Figur schematisch als ein von vorn nach hinten, das heißt von links nach rechts in der Figur leicht abschüssiger Strich dargestellt ist. Der Zapfen ist in dem U-Profil 7 drehbar und ermöglicht so eine Schwenkbewegung des Rückenteils 1 gleichzeitig mit einer Verschiebung des Zapfens in dem U-Profil 7.

Ein starrer Lenker 8, der wie der Arm 3 durch eine Metallstange oder ein Metallprofil gebildet sein kann, hat ein erstes Ende 9, das vordere, untere Ende in Fig. 1, das an ein in der Figur nicht dargestelltes, ortsfestes Trägerelement der Karosserie angelenkt ist, und ein zweites Ende 10, das an einen mittleren Bereich des Rückenteils 1 angelenkt ist und eine zweite Schwenkachse für das Rückenteil 1 definiert.

Das Sitzteil 1 ist in der aufgeklappten Stellung der Fig. 1 im wesentlichen abgestützt durch eine Querstange 11, die über die Sitzfläche des Sitzteils 2 seitwärts ausgreift und mit ihren Enden auf einer an der Karosserie festen Führungsschiene 12 ruht, sowie durch den Arm 3, der, gehalten am unteren Bereich 4 des Rückenteils 1, den vorderen Rand 5 des Sitzteils 2 unterstützt.

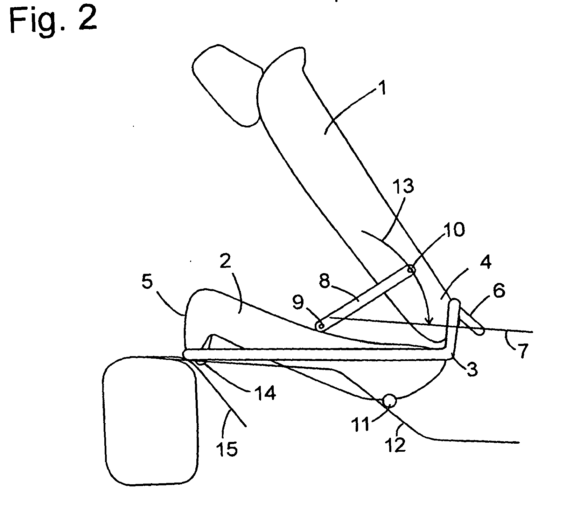

Wenn ein (in den Figuren nicht dargestellter) Verriegelungsmechanismus entriegelt wird, ist es möglich, das Rückenteil 1 vorzuschwenken, wie in Fig. 2 gezeigt. In der in dieser Figur gezeigten halb zusammengeklappten Stellung des Sitzes ist der Stützarm 6 deutlich sichtbar entlang des U-Profils 7 nach hinten verschoben, und das bewegliche Ende 10 des Lenkers 8 ist auf seiner durch einen Pfeil 13 bezeichneten kreisbogenförmigen Bahn ein Stück weit abwärts bewegt, so dass das Rückenteil 1 vorn- über geneigt ist. Das Sitzteil 2 ist, gezogen durch den Arm 3, der Ausweichbewegung des unteren Bereichs 4 nach hinten gefolgt, wodurch die Querstange 11 einen vergleichsweise stark abschüssigen Bereich ihrer Führungsschiene 12 erreicht hat und der hintere Bereich des Sitzteils 2 abwärts geschwenkt ist. Auf diese Weise gibt der hintere Bereich des Sitzteils 2 ein Volumen frei, das in der aufgeklappten Stellung der Fig. 1 von ihm belegt ist, so dass der untere Bereich 4 des Rückenteils 1 im Laufe seiner Schwenkbewegung in dieses Volumen eindringen kann.

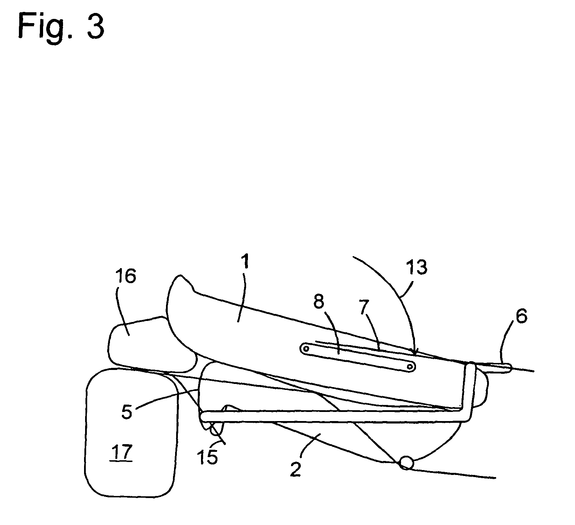

Wenn die Schwenkbewegung des Rückenteils 1 fortgesetzt wird und das Sitzteil 2 dementsprechend weiter zurückgezogen wird, gelangt ein Stützvorsprung 14 am vorderen Rand 5 des Sitzteils 2 in Kontakt mit einer abschüssigen Schiene 15 und gleitet an dieser abwärts, so dass auch der vordere Rand 5 abtaucht. Fig. 3 zeigt die resultierende vollständig zusammengeklappte Stellung des Sitzes, in welcher der vordere Rand 5 auf der Schiene 15 so weit abwärts gerutscht ist, dass das Rückenteil 1 mit seiner Nackenstütze 16 auf seinem Unterbau 17 zu liegen kommt, der in der aufgeklappten Stellung der Fig. 1 vollständig vom Sitzteil 2 überdeckt ist.

Bei der hier gezeigten Ausgestaltung weicht das Rückenteil 1 beim Zusammenklappen so weit nach hinten aus, dass das flachgelegte Rückenteil 1 sogar einschließlich der Nackenstütze 16 nicht über die Vorderkante des Sitzteils 2 in der aufgeklappten Stellung vorsteht. Je nach Einbauumgebung des Sitzes kann ein gewisser Überstand des flachgelegten Rückenteils 1 tolerierbar sein. Dieser Überstand ist um so größer, je kürzer der Lenker 8 gewählt wird.

Das Ausmaß der Ausweichbewegung des Sitzteils 2 nach hinten ist umso größer, je größer der Abstand zwischen den zwei Achsen des Rückenteils ist, das heißt je höher das bewegliche Ende 10 des Lenkers 8 am Rückenteil 1 angreift.

Der erfindungsgemäße Sitz ist brauchbar als Rücksitz für ein Kraftfahrzeug, besonders allerdings als Beifahrersitz. Bei Verwendung als Beifahrersitz dringen der untere Bereich 4 des Rückenteils 1 und der hintere Bereich des Sitzteils 2 in zusammengeklapptem Zustand in den Fußraum eines hinter dem Beifahrersitz liegenden Rücksitzes ein, so dass sich, wenn gleichzeitig auch das Rückenteil des Rücksitzes umgeklappt ist, eine durchgehende Ladefläche ergibt, die von einer Heckklappe des Fahrzeugs bis zum Armaturenbrett reicht.

### Bezugszeichenliste

- Rückenteil: 1
- Sitzteil: 2
- Arm: 3
- unterer Abschnitt: 4
- Vorderkante: 5
- Stützarm: 6
- U-Profil: 7
- Lenker: 8
- 1. Ende des Lenkers: 9
- 2. Ende: 10
- Querstange: 11
- Führungsschiene: 12
- Bahn: 13
- Stützvorsprung: 14
- Schiene: 15
- Nackenstütze: 16
- Unterbau: 17

## Patentansprüche

1. Klappbarer Sitz mit einem Sitzteil (2), einem Rückenteil (1) und einer Tragstruktur (7, 12, 15, 17), bei dem das Sitzteil (2) mit einem unteren Abschnitt (4) des Rückenteils (1) gelenkig verbunden ist, und das Rückenteil (1) in Bezug auf die Tragstruktur (7, 12, 15, 17) schwenkbar gehalten ist, wobei das Rückenteil (1) zwei Schwenkachsen aufweist, die in Bezug auf die Tragstruktur (7, 12, 15, 17) in Bahnen (7, 13) verschiebbar sind, wobei die erste Achse (10) im aufgeklappten Zustand des Sitzes höher als die zweite Achse liegt und ihre Bahn (13) von vorn nach hinten stärker abschüssig ist als die Bahn (7) der zweiten Achse und wobei die Bahn (13) der ersten Achse (10) durch einen Lenker (8) definiert ist, von dem ein erstes, vorderes Ende (9) an die Tragstruktur angelenkt ist und ein zweites (10) die erste Achse definiert, **dadurch gekennzeichnet, dass** der vordere Abschnitt (5) des Sitzteils (2) auf einer zweiten Schiene (15) der Tragstruktur verschiebbar abgestützt ist.

2. Klappbarer Sitz nach Anspruch 1, **dadurch gekennzeichnet, dass** das erste Ende (9) des Lenkers (8) im aufgeklappten Zustand des Sitzes tiefer liegt als das zweite (10).

3. Klappbarer Sitz nach einem der vorhergehenden Ansprüche, **dadurch gekennzeichnet, dass** die Bahn (7) der zweiten Achse durch eine an der Tragstruktur gebildete erste Schiene (7) definiert ist.

4. Klappbarer Sitz nach einem der vorhergehenden Ansprüche, **dadurch gekennzeichnet, dass** die gelenkige Verbindung des Rückenteils (1) mit dem Sitzteil (2) durch einen Arm (3) gebildet ist, der einerseits an dem unteren Abschnitt (4) des Rückenteils und andererseits an dem Sitzteil (2) angelenkt ist.

5. Klappbarer Sitz nach Anspruch 4, **dadurch gekennzeichnet, dass** der Arm (3) an einem vorderen Abschnitt (5) des Sitzteils (2) angelenkt ist.

6. Klappbarer Sitz nach einem der vorhergehenden Ansprüche, **dadurch gekennzeichnet, dass** ein hinterer Abschnitt des Sitzteils (2) auf einer dritten Schiene (12) der Tragstruktur verschiebbar abgestützt ist.

7. Klappbarer Sitz nach einem der vorhergehenden Ansprüche, **dadurch gekennzeichnet, dass** im zusammengeklappten Zustand die Rückseite des Rückenteils (1) mit einer Ladefläche eines Fahrzeugs bündig ist, in das der Sitz eingebaut ist.

8. Klappbarer Sitz nach einem der Ansprüche 1 bis 7, **dadurch gekennzeichnet, dass** er ein Beifahrersitz eines Fahrzeugs ist.

9. Klappbarer Sitz nach einem der vorhergehenden Ansprüche, **dadurch gekennzeichnet, dass** im zusammengeklappten Zustand des Sitzes die Oberkante des Rückenteils (1) nicht über die Vorderkante (5) des Sitzteils (2) im aufgeklappten Zustand vorsteht.

## Claims

1. Foldable seat with a seat part (2), a back part (1) and a support structure (7, 12, 15, 17), in which the seat part (2) is articulated to a lower section (4) of the back part (1), and the back part (1) is held to pivot in relation to the support structure (7, 12, 15, 17), wherein the back part (1) has two pivot axes, which are displaceable in paths (7, 13) in relation to the support structure (7, 12, 15, 17), wherein the first axis (10) lies higher than the second axis when the seat is in the unfolded state and its path (13) from front to rear is much steeper than the path (7) of the second axis, and wherein the path (13) of the first axis (10) is defined by a guide rod (8), of which a first front end (9) is articulated to the support structure and a second (10) defines the first axis, **characterised in that** the front section (5) of the seat part (2) is displaceably supported on a second rail (15) of the support structure.

2. Foldable seat according to claim 1, **characterised in that** when the seat is in the unfolded state the first end (9) of the guide rod (8) lies lower than the second (10).

3. Foldable seat according to one of the preceding claims, **characterised in that** the path (7) of the second axis is defined by a first rail (7) formed on the support structure.

4. Foldable seat according to one of the preceding claims, **characterised in that** the articulated connection of the back part (1) with the seat part (2) is formed by an arm (3), which is articulated on one side to the lower section (4) of the back part and on the other side to the seat part (2).

5. Foldable seat according to claim 4, **characterised in that** the arm (3) is articulated to a front section (5) of the seat part (2).

6. Foldable seat according to one of the preceding claims, **characterised in that** a rear section of the seat part (2) is displaceably supported on a third rail (12) of the support structure.

7. Foldable seat according to one of the preceding claims, **characterised in that** in the folded-down state the rear side of the back part (1) is flush with a loading surface of a vehicle, into which the seat is installed.

8. Foldable seat according to one of claims 1 to 7, **characterised in that** it is a front passenger seat of a vehicle.

9. Foldable seat according to one of the preceding claims, **characterised in that** when the seat is in the folded-down state the upper edge of the back part (1) does not project beyond the front edge (5) of the seat part (2) in the unfolded state.

## Revendications

1. Siège rabattable, avec une partie d'assise (2), une partie de dossier (1) et une structure de support (7, 12, 15, 17), pour lequel la partie d'assise (2) est reliée de façon articulée à un tronçon inférieur (4) de la partie de dossier (1), et la partie de dossier (1) est maintenue à pivotement par rapport à la structure de support (7, 12, 15, 17), la partie de dossier (1) présentant deux axes de pivotement déplaçables par rapport à la structure de support (7, 12, 15, 17) dans des voies (7, 13), le premier axe (10), à l'état rabattu ouvert du siège, étant plus haut que le deuxième axe et sa voie (13) étant plus fortement inclinée de l'avant vers l'arrière que la voie (7) du deuxième axe, et la voie (13) du premier axe (10) étant définie par un bras articulé (8), dont une première extrémité avant (9) est articulée à la structure de support et une deuxième extrémité (10) définit le premier axe, **caractérisé en ce que** le tronçon avant (5) de la partie d'assise (2) est soutenu de façon déplaçable sur une deuxième glissière (15) de la structure de support.

2. Siège rabattable selon la revendication 1, **caractérisé en ce que** la première extrémité (9) de la biellette (8) est située plus bas que la deuxième (10) extrémité à l'état rabattu ouvert du siège.

3. Siège rabattable selon l'une des revendications précédentes, **caractérisé en ce que** la voie (7) du deuxième axe est définie par une première glissière (7) formée sur la structure de support.

4. Siège rabattable selon l'une des revendications précédentes, **caractérisé en ce que** la liaison articulée de la partie de dossier (1) avec la partie d'assise (2) est formée par un bras (3), qui, d'une part, est articulé sur le tronçon inférieur (4) de la partie de dossier et, d'autre part, est articulé sur la partie d'assise (2).

5. Siège rabattable selon la revendication 4, **caractérisé en ce que** le bras (3) est articulé sur un tronçon avant (5) de la partie d'assise (2).

6. Siège rabattable selon l'une des revendications précédentes, **caractérisé en ce qu'**un tronçon arrière de la partie d'assise (2) est soutenu de façon déplaçable sur une troisième glissière (12) de la structure de support.

7. Siège rabattable selon l'une des revendications précédentes, **caractérisé en ce que**, à l'état refermé par rabattement, la face arrière de la partie de dossier (1) est en affleurement avec une surface de charge d'un véhicule dans lequel le siège est intégré.

8. Siège rabattable selon l'une des revendications 1 à 5, **caractérisé en ce qu'**il constitue un siège de passager d'un véhicule.

9. Siège rabattable selon l'une des revendications précédentes, **caractérisé en ce que**, lorsque le siège est à l'état refermé par rabattement, le bord supérieur de la partie de dossier (1) ne fait pas saillie sur le bord avant (5) de la partie d'assise (2) à l'état ouvert par rabattement.
